# EUROPÄISCHE PATENTSCHRIFT

(11) **EP 2 349 791 B1**
(45) Veröffentlichungstag und Bekanntmachung des Hinweises auf die Patenterteilung: **12.07.2017**
(21) Anmeldenummer: 09782485.8
(22) Anmeldetag: 02.09.2009
(51) Int. Cl.: B60R 21/017

(54) **VORRICHTUNG ZUR BESTROMUNG EINER ZÜNDENDSTUFE**
DEVICE FOR ENERGIZING AN IGNITION END STAGE
DISPOSITIF D'ALIMENTATION D'UN ÉTAGE FINAL D'ALLUMAGE

(30) Priorität: 28.10.2008 DE 102008043233
(43) Veröffentlichungstag der Anmeldung: 03.08.2011
(73) Patentinhaber: Robert Bosch GmbH, 70442 Stuttgart (DE)
(72) Erfinder: JOUSSE, Alain, 70192 Stuttgart (DE)
(86) Internationale Anmeldenummer: PCT/EP2009/061309
(87) Internationale Veröffentlichungsnummer: WO 2010/049194

(56) Entgegenhaltungen:
- EP-A- 0 794 094
- WO-A-2007/090417
- DE-A1-102005 045 233
- FR-A- 2 815 919
- US-A- 5 420 790
- US-A1- 2004 108 698

## Beschreibung

### Stand der Technik

Die vorliegende Erfindung bezieht sich auf eine Vorrichtung zur Bestromung einer Zündendstufe gemäß Anspruch 1.

Die DE 10 2004 010135 A1 beschreibt eine Vorrichtung zur Bestromung einer Zündendstufe mittels eines Zündstroms aus einer Energiereserve. Dabei ist zwischen der Energiereserve und der Zündendstufe ein Spannungsregler vorgesehen, der eine Spannung an der wenigstens einen Zündendstufe auf einen vorgegebenen Wert einstellt. Der Spannungsregler ist in einem ASIC angeordnet.

Die US 2004/0108698 A befasst sich mit einer Ansteuerschaltung für eine durch einen elektrischen Gleichstrom-Zündimpuls auslösbare Zündpille eines Fahrzeugrückhaltesystems. In dem Zündstromkreis ist ein Leistungsschaltelement in Form eines N-Kanal-FETs angeschlossen, um aus dem Zündstromkreis während der Dauer des Zündimpulses Verlustleistung aufzunehmen. Der Gateanschluss des N-Kanal-FET ist mit einer Konstantspannungsquelle verbunden.

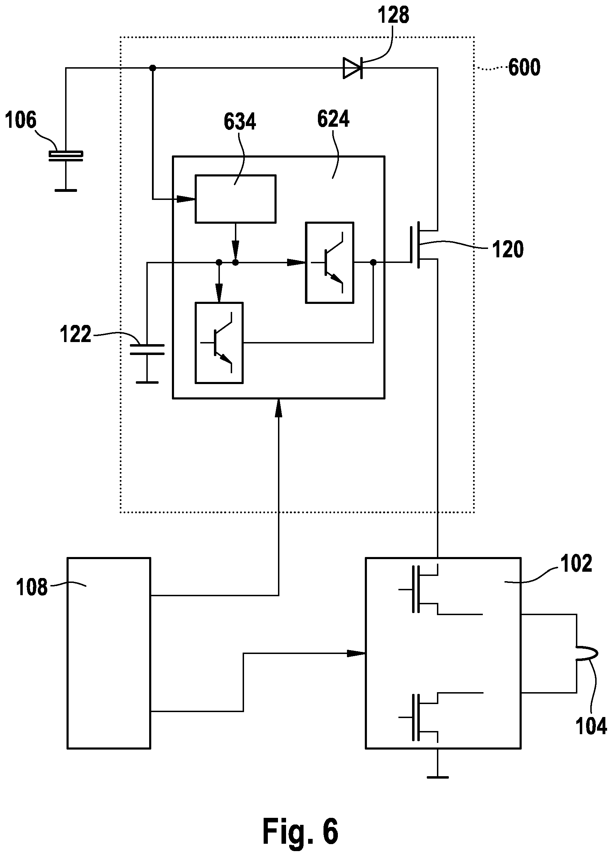

Fig. 6 zeigt ein Blockschaltbild eines Spannungsvorreglers für Zündendstufen gemäß dem Stand der Technik. Gezeigt ist eine Vorrichtung 600, die ausgebildet ist, um einen Zündstrom an eine Zündendstufe 102 bereitzustellen. Die Zündendstufe 102 ist ausgebildet, um eine Zündpille 104 anzusteuern. Die Vorrichtung 600 ist mit einer Energiereserve 106 und einem Mikrokontroller 108 verbunden. Zum Bereitstellen des Zündstroms weist die Vorrichtung 600 einen N-Kanal MOSFET 120 auf. Der Zündstrom wird von einem Sourceanschluss des N-Kanal MOSFET 120 bereitgestellt. Ein Drainanschluss des N-Kanal MOSFET 120 ist über eine Diode 128 mit der Energiereserve 106 verbunden. Eine Gatespannung des N-Kanal MOSFET 120 wird von einem Kondensator 122 über ein ASIC 624 bereitgestellt. Das ASIC 624 weist eine Ladungspumpe (Charge Pump) 634 und zwei Transistorschaltungen auf. Der Mikrokontroller 108 ist ausgebildet, um ein Signal An/Aus (ON/OFF) an das ASIC 624 bereitzustellen, um eine Bereitstellung des Zündstroms zu unterbrechen. Der Mikrokontroller 108 ist ferner ausgebildet, um ein Signal "Zündung" ("Fire") an die Zündendstufe 102 bereitzustellen. Eine

Anbindung zwischen der Vorrichtung 624 und das Source des MOSFET 120 ist in Fig. 6 nicht dargestellt.

Somit sind die Funktionen zum Bereitstellen des Zündstroms in dem Transistor 120 und dem ASIC 624 integriert. Das ASIC 624 ist ausgebildet, um den externen N-Kanal MOS-FET Transistor 120 in einer source-follower Architektur zu regeln. Dabei wird der Gate-Anschluss des Transistors 120 vom ASIC 624 an einer vordefinierten Spannung gehalten bzw. geregelt. Der Source-Anschluss folgt dem Gate (V_{SOURCE} = V_{GATE} - V_{GS(th)}) und der durch die Zündendstufen geregelte Zündstrom fließt über den MOSFET Transistor 120. Das ganze ASIC 624 wird über eine Ladungspumpe 634 und der externen Kapazität 122 versorgt. Die Ladungspumpe 634 stellt sicher, dass die Gate-Spannung des MOSFET Transistor 120 auch bei einem Einbruch der Versorgung 106 (Energie Reserve Spannung) beim Zünden hochgehalten wird, so dass der MOSFET Transistor 120 mit dem geringsten Widerstand R_{DS(ON)} durchgeschaltet werden kann.

### Offenbarung der Erfindung

Vor diesem Hintergrund wird mit der vorliegenden Erfindung eine Vorrichtung zur Bestromung einer Zündendstufe gemäß dem unabhängigen Patentanspruch vorgestellt. Vorteilhafte Ausgestaltungen ergeben sich aus den jeweiligen Unteransprüchen und der nachfolgenden Beschreibung.

Die Erfindung basiert auf der Erkenntnis, dass ein abschaltbarer Spannungsvorregler für Zündendstufen mit diskreten Bauelementen realisiert werden kann. Somit ist ein ASIC nicht erforderlich. Insbesondere kann auch die bisher eingesetzte Ladungspumpe durch eine einfache Versorgungsschaltung ersetzt werden. Dies ist möglich, da die zur Ansteuerung des MOSFET Transistors eingesetzte Kapazität, erfindungsgemäß ausschließlich zum Aufladen des Gates des Transistors und nicht zur Versorgung weiterer Schaltelemente vorgesehen ist. Somit kann gewährleistet werden, dass die Gate-Spannung am Transistor auch nach einem Abfall der Energiereserve, beispielsweise aufgrund eines Zündimpulses, aufrechterhalten wird.

Vorteilhafterweise kann die Anzahl der erforderlichen Bauelemente durch den erfindungsgemäßen Ansatz erheblich reduziert werden. Da das bisher eingesetzte, teure ASIC überflüssig wird und die Schaltung diskret kostengünstiger aufgebaut werden kann, ergibt sich eine deutliche Kostenreduzierung.

Die vorliegende Erfindung schafft eine Vorrichtung zur Bestromung einer Zündendstufe, mit folgenden Merkmalen: einem Transistor mit einem Steuereingang, wobei der Transistor ausgebildet ist, um abhängig von einer an dem Steuereingang anliegenden Steuerspannung einen Zündstrom bereitzustellen; einem Kondensator, der mit dem Steuereingang des Transistors verbunden ist und ausgebildet ist, um die Steuerspannung an den Steuereingang bereitzustellen; und einer Versorgungsschaltung mit einem Widerstand, der zwischen dem Kondensator und einem Versorgungsspannungsanschluss geschaltet ist, wobei die Versorgungsschaltung ausgebildet ist, um den Kondensator über den Widerstand auf die Steuerspannung aufzuladen.

Die erfindungsgemäße Vorrichtung kann zur Auslösung eines Rückhaltemittels bei einem Unfall eines Fahrzeugs eingesetzt werden. Beispielsweise kann der Zündstrom zur Aktivierung einer Zündpille eines Airbags geeignet sein. Der Transistor kann als n-Kanal MOSFET (Metall-Oxid-Halbleiter-Feldeffekttransistor) mit einem Gate-Anschluss als Steuereingang und einem Source-Anschluss zum Bereitstellen des Zündstroms ausgeführt sein. Überschreitet die Steuerspannung eine Schwellspannung des Transistors, so wird der Transistor leitend und kann den Zündstrom bereitstellen. Der Kondensator kann eine Kapazität aufweisen, die zum Aufladen des Gate-Anschlusses auf die Schwellspannung geeignet ist. Der Versorgungsspannungsanschluss ist geeignet, um die Vorrichtung mit einer Energiereserve zu verbinden. Aus der Energiereserve kann der Zündstrom und die Steuerspannung bereitgestellt werden. Die Versorgungsschaltung kann ausschließlich aus diskreten Bauelementen aufgebaut sein. Der Widerstand kann durch ein Widerstandselement, einen Innenwiderstand eines Schaltungselements der Versorgungsschaltung oder durch einen Leitungswiderstand ausgebildet sein. Die Steuerspannung kann einer an dem Versorgungsspannungsanschluss anliegenden Versorgungsspannung abzüglich einer an dem Widerstand abfallenden Spannung entsprechen. Somit ist eine maximale Steuerspannung geringer als eine maximale Versorgungsspannung.

Der Transistor kann einen Eingang aufweisen, der mit dem Versorgungsspannungsanschluss verbunden ist. Bei dem Eingang kann es sich um einen Drain-Anschluss handeln. Überschreitet die am Steuereingang des Transistors anliegende Steuerspannung die Schwellspannung des Transistors, so wird der Transistor leitend und der Zündstrom kann aus der Energiereserve über den Transistor an die Zündendstufe bereitgestellt werden.

Gemäß einer Ausgestaltung kann die Versorgungsschaltung ein Bauelement aufweisen, das ausgebildet ist, um eine Entladung des Kondensators über den Widerstand zu verhindern. Somit kann die Steuerspannung auch dann aufrechterhalten werden, wenn die Versorgungsspannung, beispielsweise bei einer Zündung der Zündendstufe unter den Wert der Steuerspannung abfällt. Das Bauelement kann eine Diode sein. Ferner kann das Bauelement ein Transistor sein. Dabei kann der Widerstand zumindest teilweise durch einen Innenwiderstand des Bauelements gebildet werden. Wird der Widerstand vollständig durch den Innenwiderstand des Bauelements gebildet, so ist ein separater Widerstand nicht erforderlich.

Gemäß einer Ausgestaltung kann die Versorgungsschaltung eine Zenerdiode aufweisen, die mit dem Kondensator verbunden ist, um die Steuerspannung zu stabilisieren. Somit wird die Steuerspannung unabhängig von der Energiereserve. Wird die Versorgungsschaltung bei einem Unfall von der Energiereserve getrennt, so kann der Gate-Anschluss des Transistors dennoch weiter aufgeladen werden, um eine Bereitstellung des Zündstroms zu ermöglichen.

Ferner kann die Vorrichtung einen bzw. zwei Längswiderstände aufweisen, die zwischen dem Kondensator und dem Versorgungsschalungsausgang bzw. zwischen dem Kondensator und dem unten beschriebenen Schalter geschaltet sind. Eine an dem Längswiderstand abfallende Spannung kann für Diagnosezwecke eingesetzt werden.

Gemäß einer Ausgestaltung weist die Vorrichtung einen Schalter auf, der ausgebildet ist, um abhängig von einem Schaltsignal eine elektrische Verbindung zwischen dem Steuereingang und einem Ausgang des Transistors bereitzustellen. Somit können Spannungspotentiale am Gate-Anschluss und am Source-Anschluss gleichgesetzt und der Transistor gesperrt werden. Die Bereitstellung des Zündstroms wird damit unterbrochen.

### Kurze Beschreibung der Zeichnungen

Die Erfindung wird nachstehend anhand der beigefügten Zeichnungen beispielhaft näher erläutert. Es zeigen:
- Fig. 1: ein Blockschaltbild eines ersten Ausführungsbeispiels der vorliegenden Erfindung;
- Fig. 2a - 2f: Schaltbilder einer Versorgungsschaltung gemäß Ausführungsbeispielen der vorliegenden Erfindung;
- Fig. 3a, 3b: Schaltbilder eines Schalters gemäß Ausführungsbeispielen der vorliegenden Erfindung;
- Fig. 4: ein Blockschaltbild eines weiteren Ausführungsbeispiels der vorliegenden Erfindung;
- Fig. 5a, 5b: Kennlinien eines Ausführungsbeispiels der vorliegenden Erfindung; und
- Fig. 6: ein Blockschaltbild einer Vorrichtung gemäß dem Stand der Technik.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

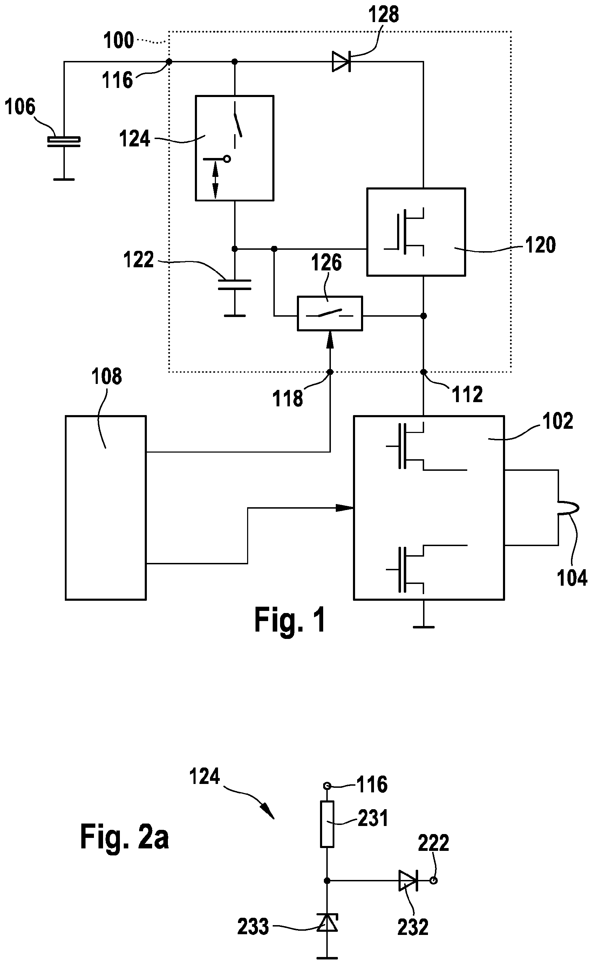

Fig. 1 zeigt ein Blockschaltbild einer Vorrichtung 100 zur Bestromung einer Zündendstufe 102, gemäß einem Ausführungsbeispiel der vorliegenden Erfindung. Bei der Vorrichtung 100 kann es sich um einen diskreten, abschaltbaren Spannungsvorregler für Zündendstufen handeln.

Die Vorrichtung 100 ist ausgebildet, um einen Zündstrom an die Zündendstufe 102 bereitzustellen. Bei der Zündendstufe 102 kann es sich um eine Zündendstufe handeln, die ausgebildet ist, um eine Zündpille 104 anzusteuern. Die Vorrichtung 100 ist ferner mit einer Energiereserve 106 und einem Mikrokontroller (µC) 108 gekoppelt.

Die Vorrichtung 100 weist einen Ausgang 112 zum Ausgeben des Zündstroms an die Zündendstufe 102 auf. Ferner weist die Vorrichtung 100 einen Versorgungsspannungsanschluss 116 auf, über den die Vorrichtung 100 mit der Energiereserve 106 verbunden werden kann. Die Energiereserve 106 kann mehrere Kondensatoren, vorzugsweise Elektrolytkondensatoren aufweisen. Über einen Schaltanschluss 118 ist die Vorrichtung 100 mit dem Mikrokontroller verbunden. Der Mikrokontroller 108 kann über den Schaltanschluss 118 ein Schaltsignal (ON/OFF) an die Vorrichtung 100 bereitstellen. Das Schaltsignal kann die Bereitstellung des Zündstroms steuern. Ferner kann der Mikrokontroller 108 ein Zündsignal (Fire) an die Zündendstufe 102 bereitstellen.

Die Vorrichtung 100 weist einen N-Kanal MOSFET 120 auf. Der N-Kanal MOSFET 120 weist einen Drain-Anschluss, einen Gate-Anschluss und einen Source-Anschluss auf. Ferner weist die Vorrichtung 100 eine Kapazität oder einen Kondensator 122, eine Versorgungsschaltung 124, einen Schalter 126 und eine Diode 128 auf. Der Drain-Anschluss des N-Kanal MOSFET 120 ist über die Diode 128 mit dem Versorgungsspannungsanschluss verbunden. Der Source-Anschluss des N-Kanal MOSFET 120 ist mit dem Ausgang 112 verbunden. Der Gate-Anschluss des N-Kanal MOSFET 120 ist mit einem ersten Anschluss des Kondensators 122 verbunden. Der Kondensator 122 kann so verschaltet sein, dass er ausschließlich zur Aufladung der Gateelektrode des N-Kanal MOSFET 120 dient. Ein zweiter Anschluss des Kondensators 122 ist mit Masse verbunden. Ein erster Anschluss der Versorgungsschaltung 124 ist mit dem Versorgungsspannungsanschluss 116 verbunden. Ein zweiter Anschluss der Versorgungsschaltung 124 ist mit dem ersten Anschluss des Kondensators 122 verbunden. Ein erster Anschluss des Schalters 126 ist mit dem Gate-Anschluss des N-Kanal MOSFET 120 verbunden. Ein zweiter Anschluss des Schalters 126 ist mit dem Source-Anschluss des N-Kanal MOSFET 120 verbunden. Ein dritter Anschluss des Schalters 126 ist mit dem Schaltanschluss 118 verbunden.

Die Versorgungsschaltung 124 ist ausgebildet, um eine Steuerspannung V_{ref} an den Kondensator 122 bereitzustellen. Dazu kann die Versorgungsschaltung 124 ausgebildet sein, um den ersten Anschluss des Kondensators 122 über einen Widerstand mit dem Versorgungsspannungsanschluss 116 zu verbinden. An dem Widerstand tritt ein Spannungsabfall auf. Somit kann der Kondensator 122 nicht ganz auf die am Versorgungsspannungsanschluss 116 anliegende Versorgungsspannung aufgeladen werden. Bei dem Widerstand kann es sich um einen Leitungswiderstand, ein diskretes passives Bauteil oder um den Innenwiderstand einer Diode oder eines Transistors der Versorgungsschaltung 124 handeln. Mögliche Ausführungsbeispiele der Versorgungsschaltung 124 sind in den Figuren 2a bis 2f gezeigt.

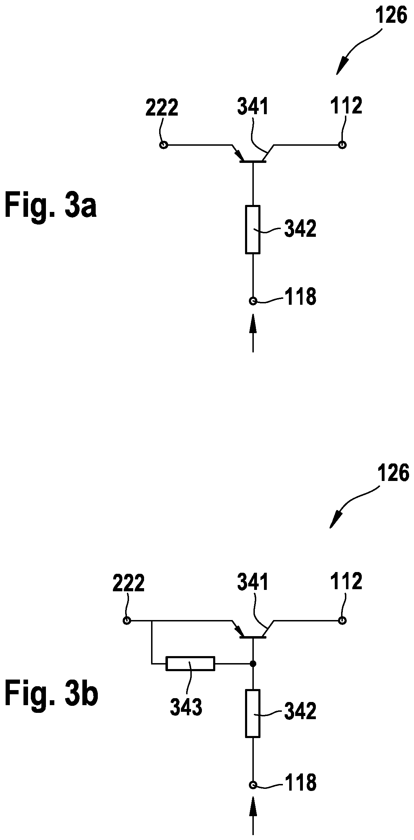

Der Schalter 126 ist ausgebildet, um die Bereitstellung des Zündstroms zu steuern. Die Steuerung kann ansprechend auf das von dem Mikrokontroller 108 bereitgestellte Schaltsignal erfolgen. Um den Transistor 120 zu sperren, kann der Schalter 126 ausgebildet sein, um einen Kurzschluss zwischen dem Gate-Anschluss und dem Source-Anschluss des Transistors 120 auszulösen. In diesem Fall kann dennoch ein kleiner Strom für Diagnosezwecke fließen. Mögliche Ausführungsbeispiele des Schalters 126 sind in den Figuren 3a und 3b gezeigt.

Erfindungsgemäß wird die, auf eine definierte Spannung vorgeladene Kapazität 122 (>10nF) direkt am Gate des N-Kanal MOSFET Transistors 120 eingebaut. Bei der Zündung dient diese Kapazität 122 als Pufferkondensator, um die Spannung am Gate hochzuhalten, wenn die Versorgungspannung 106 einbricht. Die Kapazität 122 erfüllt somit die Funktion der Ladungspumpe der in Fig. 6 gezeigten ASIC Auslegung. Die aus der Energiereserve 106 gespeiste Versorgungsspannung kann bis zum Auftreten der ersten Zündung stabil sein.

Die Versorgungsschaltung 124 weist die Funktionen eines Schalters und einer Referenzspannung auf. Der Schalter kann ausgebildet sein, um zu vermeiden, dass die Kapazität 122 bei einer niedrigen Versorgungsspannung entladen wird. Beispielsweise kann der Schalter als Diode oder Transistor ausgeführt sein und zwischen dem Gate-Anschluss des Transistors 120 und der Versorgung 106 angeordnet sein. Die Referenzspannung ist für die Aufladung der Gate-Kapazität 122 und folglich für das Source (source-follower Architektur) vorgesehen.

Der von dem Mikrokontroller 108 gesteuerte Schalter 126 kann zwischen Gate und Source des Transistors 120 eingebaut werden, um den MOSFET Transistor 122 abzuschalten (Schalter on). Das Abschalten kann insbesondere erfolgen, wenn der Zündstromfluss nicht erlaubt ist. In diesem Fall muss die Spannung am Source einbrechen. Ferner ist der Schalter 126 ausgebildet, um den MOSFET Transistor 122 einzuschalten (Schalter off), um die source-follower Architektur darzustellen und sicherzustellen dass die Gate-Kapazität 122 nicht entladen wird. Der Schalter 126 kann beispielsweise als Diode oder Transistor ausgebildet sein.

Gemäß einem Ausführungsbeispiel können anstelle eines einzigen MOSFET Transistor 120 mehrere Transistoren eingesetzt werden. Dabei kann es sich auch um unterschiedliche Transistoren handeln.

Die Figuren 2a bis 2f zeigen Ausführungsbeispiele der Versorgungsschaltung 124. Die gezeigten Versorgungsschaltungen 124 weisen jeweils den Versorgungsspannungsanschluss 116 und einen Kapazitäts-Anschluss 222 auf. Ferner können die Versorgungsschaltungen 124 einen Masseanschluss aufweisen. Über den Versorgungsspannungsanschluss 116 können die Versorgungsschaltungen 124 mit der Energiereserve verbunden werden. Über den Kapazitäts-Anschluss 222 können die Versorgungsschaltungen 124 mit dem Gate-Anschluss des Transistors 120 (gezeigt in Fig. 1) und mit dem Kondensator 122 (gezeigt in Fig. 1) verbunden werden.

Fig. 2a zeigt ein Schaltbild einer Versorgungsschaltung 124 mit einem Widerstand 231, einer Diode 232 und einer Zener-Diode 233. Ein erster Anschluss des Widerstands 231 ist mit dem Versorgungsspannungsanschluss 116 verbunden. Ein zweiter Anschluss des Widerstands 231 ist über die Diode 232 mit dem Kapazitätsanschluss 222 und über die Zenerdiode 233 mit Masse verbunden. Die Diode 232 ist so geschaltet, dass eine Entladung des Kondensators über den Widerstand 231 verhindert wird. Die Zenerdiode 233 ist so geschaltet, dass eine Stabilisierung oder Aufladung des Kondensators möglich ist.

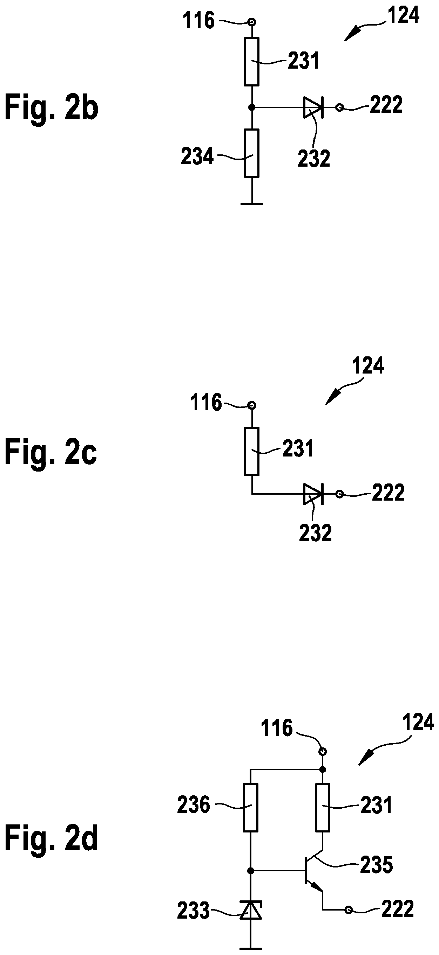

Fig. 2b zeigt ein Schaltbild einer weiteren Versorgungsschaltung 124 mit dem Widerstand 231, der Diode 232 und einem weiteren Widerstand 234. Der erste Anschluss des Widerstands 231 ist mit dem Versorgungsspannungsanschluss 116 verbunden. Der zweite Anschluss des Widerstands 231 ist über die Diode 232 mit dem Kapazitätsanschluss 222 und über den weiteren Widerstand 234 mit Masse verbunden. Die Diode 232 ist so geschaltet, dass eine Entladung des Kondensators über den Widerstand 231 verhindert wird.

Fig. 2c zeigt ein Schaltbild einer weiteren Versorgungsschaltung 124 mit dem Widerstand 231 und der Diode 232. Der erste Anschluss des Widerstands 231 ist mit dem Versorgungsspannungsanschluss 116 verbunden. Der zweite Anschluss des Widerstands 231 ist über die Diode 232 mit dem Kapazitätsanschluss 222 verbunden. Die Diode 232 ist so geschaltet, dass eine Entladung des Kondensators über den Widerstand 231 verhindert wird.

Fig. 2d zeigt ein Schaltbild einer weiteren Versorgungsschaltung 124 mit dem Widerstand 231, einem Transistor 235, einem weiteren Widerstand 236 und einer Zenerdiode 233. Der Transistor 235 kann als npn-Bipolartransistor ausgebildet sein. Der erste Anschluss des Widerstands 231 ist mit dem Versorgungsspannungsanschluss 116 verbunden. Der zweite Anschluss des Widerstands 231 ist mit einem Kollektor des Transistors 235 verbunden. Der Emitter des Transistors 235 ist mit dem Kapazitätsanschluss 222 verbunden. Die Basis des Transistors 235 ist über den weiteren Widerstand 236 mit dem Versorgungsspannungsanschluss 116 und über die Zenerdiode 233 mit Masse verbunden. Die Zenerdiode 233 ist so geschaltet, dass eine Stabilisierung oder Aufladung des Kondensators möglich ist. Der Transistor 235 ist so geschaltet, dass eine Entladung des Kondensators über den Widerstand 231 verhindert wird.

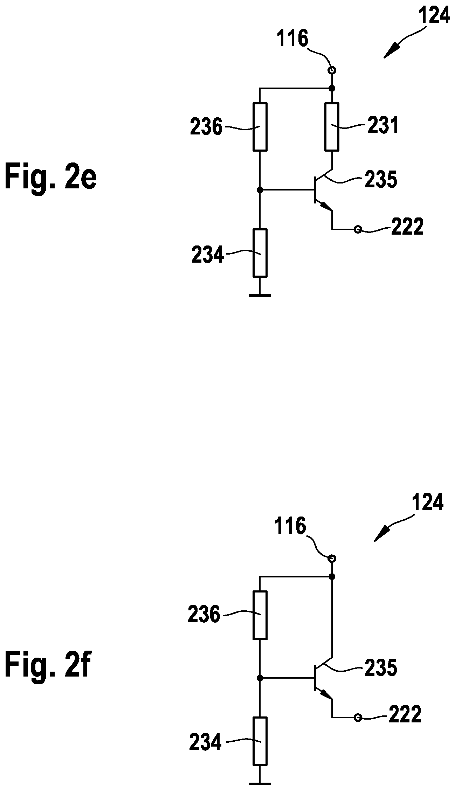

Fig. 2e zeigt ein Schaltbild einer weiteren Versorgungsschaltung 124 mit dem Widerstand 231, dem Transistor 235 und den weiteren Widerständen 234, 236. Der Transistor 235 kann als npn-Bipolartransistor ausgebildet sein. Der erste Anschluss des Widerstands 231 ist mit dem Versorgungsspannungsanschluss 116 verbunden. Der zweite Anschluss des Widerstands 231 ist mit dem Kollektor des Transistors 235 verbunden. Der Emitter des Transistors 235 ist mit dem Kapazitätsanschluss 222 verbunden. Die Basis des Transistors 235 ist über den weiteren Widerstand 236 mit dem Versorgungsspannungsanschluss 116 und über den weiteren Widerstand 234 mit Masse verbunden. Der Transistor 235 ist so geschaltet, dass eine Entladung des Kondensators über den Widerstand 231 verhindert wird.

Fig. 2f zeigt ein Schaltbild einer weiteren Versorgungsschaltung 124 mit dem Transistor 235 und den weiteren Widerständen 234, 236. Der Transistor 235 kann als npn-Bipolartransistor ausgebildet sein. Der Kollektor des Transistors 235 ist mit dem Versorgungsspannungsanschluss 116 verbunden. Der Emitter des Transistors 235 ist mit dem Kapazitätsanschluss 222 verbunden. Die Basis des Transistors 235 ist über den weiteren Widerstand 236 mit dem Versorgungsspannungsanschluss 116 und über den weiteren Widerstand 234 mit Masse verbunden. Der Transistor 235 ist so geschaltet, dass eine Entladung des Kondensators über den Widerstand 231 verhindert wird.

Die Figuren 3a bis 3b zeigen Ausführungsbeispiele des Schalters 126. Die gezeigten Schalter 126 weisen jeweils den Ausgang 112, den Schaltanschluss 118 und den Kapazitäts-Anschluss 222 auf. Über den Ausgang 112 können die Schalter 126 mit dem Source-Anschluss des Transistors 120 (gezeigt in Fig. 1) und über den Kapazitäts-Anschluss 222 mit dem Gate-Anschluss des Transistors 120 und mit dem Kondensator 122 (gezeigt in Fig. 1) verbunden werden. Über den Schaltanschluss 118 können die Schalter 126 das Schaltsignal von dem Mikrokontroller 108 (gezeigt in Fig. 1) empfangen.

Fig. 3a zeigt ein Schaltbild eines Schalters 126 mit einem Transistor 341 und einem Widerstand 342. Der Transistor 341 kann als pnp-Bipolartransistor ausgebildet sein. Der Emitter des Transistors 341 ist mit dem Kapazitätsanschluss 222 verbunden. Der Kollektor des Transistors 341 ist mit dem Ausgang 112 verbunden. Die Basis des Transistors 341 ist über den Widerstand 342 mit dem Schaltanschluss 118 verbunden.

Fig. 3b zeigt ein Schaltbild eines weiteren Schalters 126 mit dem Transistor 341, dem Widerstand 342 und einem weiteren Widerstand 343. Der Transistor 341 kann als pnp-Bipolartransistor ausgebildet sein. Der Emitter des Transistors 341 ist mit dem Kapazitätsanschluss 222 verbunden. Der Kollektor des Transistors 341 ist mit dem Ausgang 112 verbunden. Die Basis des Transistors 341 ist über den Widerstand 342 mit dem Schaltanschluss 118 und über den weiteren Widerstand 343 mit dem Kapazitätsanschluss 222 verbunden.

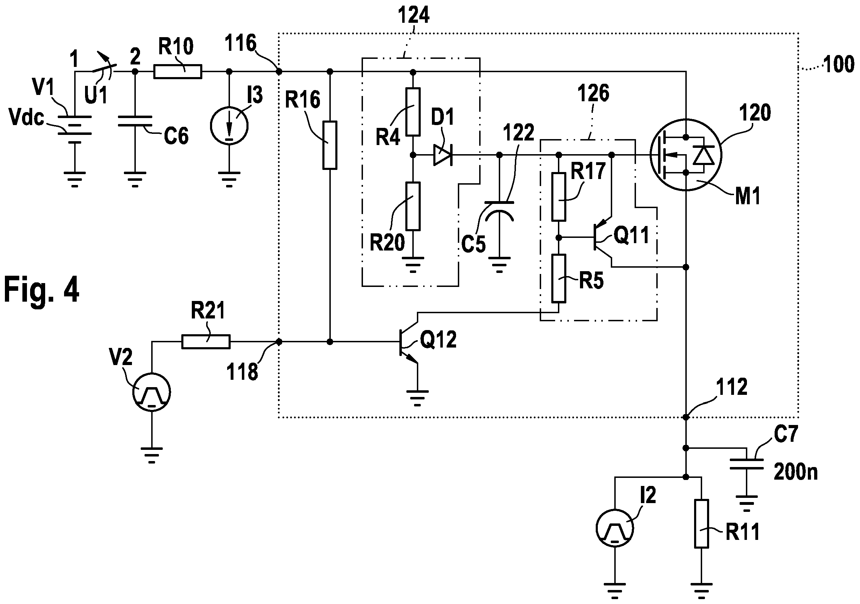

Fig. 4 zeigt ein Blockschaltbild einer Vorrichtung 100 zur Bestromung einer Zündendstufe 102, gemäß einem weiteren Ausführungsbeispiel der vorliegenden Erfindung. Die Vorrichtung weist die Anschlüsse 112, 116, 118, sowie den Transistor (M1) 120, den Kondensator 122, die Versorgungsschaltung 124 und den Schalter 126 auf.

Die Vorrichtung 100 ist ausgebildet, um einen Zündstrom an die Zündendstufe 102 bereitzustellen. Bei der Zündendstufe 102 kann es sich um eine Zündendstufe 102 handeln, die ausgebildet ist, um eine Zündpille 104 anzusteuern. Die Vorrichtung 100 ist ferner mit einer Energiereserve 106 und einem Mikrokontroller (µC) 108 gekoppelt.

Der Transistor 120 ist als N-Kanal MOSFET 120 ausgebildet. Der Drain-Anschluss des Transistors 120 ist mit dem Versorgungsspannungsanschluss 116 verbunden. Der Source-Anschluss des Transistors 120 ist zum Bereitstellen des Zündstroms mit dem Ausgang 112 verbunden. Der Gate-Anschluss des Transistors 120 ist mit dem Kondensator (C5) 122, der Versorgungsschaltung 124 und dem Schalter 126 verbunden.

Die Versorgungsschaltung 124 entspricht dem in Fig. 2b gezeigten Ausführungsbeispiel mit zwei Widerständen R4, R20 und einer Diode D1.

Der Schalter 126 entspricht dem in Fig. 3b gezeigten Ausführungsbeispiel mit zwei Widerständen R5, R17 und einem Transistor Q11.

Zwischen den Anschlüssen 116, 118 ist zur Ansteuerung des am Schaltanschluss 118 bereitgestellte Schaltsignal ein pull-up Widerstand R16 angeordnet. Ferner ist ein Transistor Q12 vorgesehen. Der Transistor Q12 wird von dem Schaltsignal geschaltet und kann im leitenden Zustand den Widerstand R5 mit Masse verbinden.

Zwischen dem Kondensator 122 und der Diode D1 kann zur Diagnose ein Längswiderstand angeordnet werden.

Zwischen dem Kondensator 122 und dem Widerstand R17 kann zur Diagnose ein Längswiderstand angeordnet werden.

Die Elemente V1, U 1, C6, R10, 13 simulieren die Energiereserve, die mit dem Versorgungsspannungsanschluss 116 verbunden ist. Die Elemente V2, R21 simulieren den Mikrokontroller, der mit dem Schaltanschluss 118 verbunden ist. Die Elemente 12, R11, C7 simulieren die Zündendstufe, die mit dem Ausgang 112 verbunden ist.

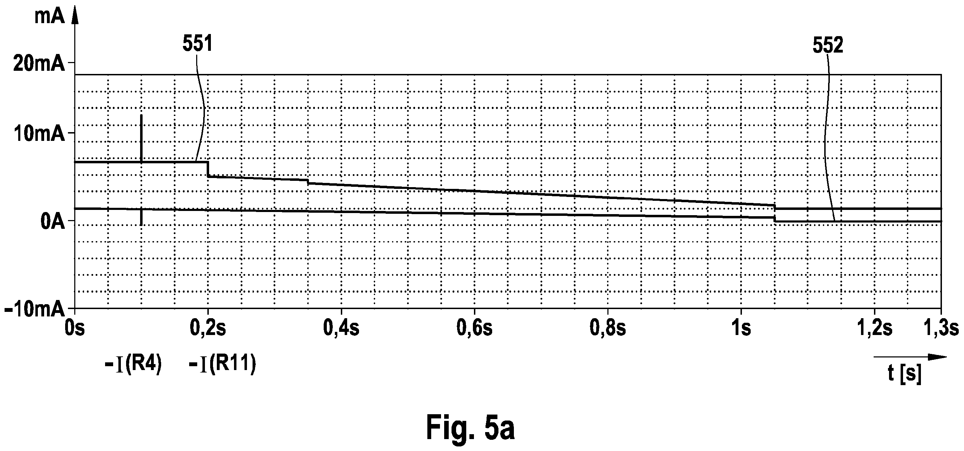

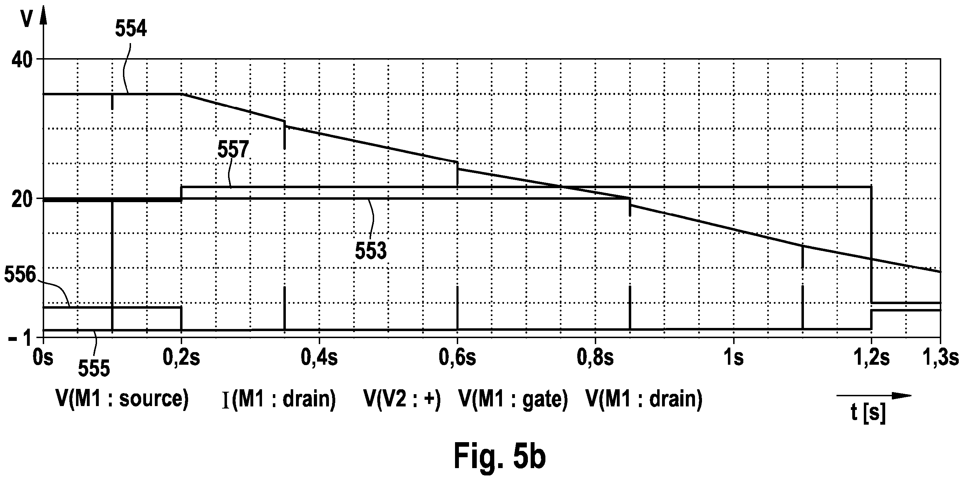

Die Figuren 5a und 5b zeigen Spannungs- und Strom-Kennlinien einer erfindungsgemäßen Vorrichtung zur Bestromung einer Zündendstufe. Insbesondere sind Spannungs- und Strom-Verläufe der in Fig. 4 gezeigten Elemente über die Zeit aufgetragen. Dabei zeigt Fig. 5a einen Stromverlauf 551 an dem Widerstand R4 und einen Stromverlauf 552 an dem Widerstand R11. Fig. 5b zeigt einen Spannungsverlauf 553 an dem Source-Anschluss des Transistors M1, einen Spannungsverlauf 554 an dem Drain-Anschluss des Transistors M1, einen Stromverlauf 555 an dem Drain-Anschluss des Transistors M1, einen Spannungsverlauf 556 an der Spannungsversorgung V2 und einen Spannungsverlauf 557 an dem Gate-Anschluss des Transistors M1.

Ein erster Zündpeak ist bei 0,1 s, ein zweiter Zündpeak bei 0,35s, ein dritter Zündpeak bei 0,6s und ein vierter Zündpeak bei 0,85s gezeigt. Der Spannungsverlauf 554 am Drain-Anschluss bleibt bis 0,2s auf 35V, da der Transistor M1 gesperrt ist. Bei 0,2s tritt ein Crash ein und die Sperrung des Transistors M1 wird durch einen Abfall der Spannung 556 an der Spannungsversorgung V2 aufgehoben. Anschließend fällt der Spannungsverlauf 554 am Drain-Anschluss des Transistors M1 kontinuierlich ab. Obwohl der Spannungsverlauf 554 am Drain-Anschluss des Transistors M1 sinkt, bleibt der Spannungsverlauf 557 an dem Gate-Anschluss des Transistors M1 konstant. Bis zu dem Zeitpunkt 0,75s, an dem sich die Spannungsverläufe 554, 557 treffen, tritt im Bezug auf die am Kondensator anliegende Spannung 557 ein hoher Verlust ein. Ab dem Zeitpunkt 0,75 liegt die Versorgungsspannung 554 unter der am Kondensator anliegenden Spannung 557 und es tritt kein Verlust auf.

Die beschriebenen Ausführungsbeispiele sind nur beispielhaft gewählt und können miteinander kombiniert werden. Anstelle der beschriebenen Schaltungselemente können auch andere geeignete Schaltungselemente eingesetzt werden, die die erfindungsgemäße Funktionalität gewährleisten. Auch sind die gezeigten Schaltungen nur beispielhaft gewählt. Sie können durch andere geeignete Schaltungen ersetzt werden. Unter einer Verbindung zwischen Schaltungselementen wird eine elektrische Verbindung verstanden, die direkt oder über weitere Schaltungselemente ausgeführt sein kann.

## Patentansprüche

1. Vorrichtung (100) zur Bestromung einer Zündendstufe (102), mit folgenden Merkmalen:
einem Versorgungsspannungsanschluss (116), der geeignet ist, um die Vorrichtung (100) mit einer Energiereserve (106) zu verbinden;
einem Transistor (120) mit einem Eingang, der mit dem Versorgungsspannungsanschluss (116) verbunden ist, einem Ausgang zum Bereitstellen eines Zündstroms und einem Steuereingang, wobei der Transistor ausgebildet ist, um abhängig von einer an dem Steuereingang anliegenden Steuerspannung den Zündstrom bereitzustellen;
einem Kondensator (122), der mit dem Steuereingang des Transistors verbunden ist und ausgebildet ist, um die Steuerspannung an den Steuereingang bereitzustellen; und
einer Versorgungsschaltung (124) mit einem Widerstand (231), der zwischen dem Kondensator (122) und dem Versorgungsspannungsanschluss (116) geschaltet ist, wobei die Versorgungsschaltung ausgebildet ist, um den Kondensator (122) über den Widerstand (231) auf die Steuerspannung aufzuladen.

2. Vorrichtung gemäß Anspruch 1, bei der die Steuerspannung einer an dem Versorgungsspannungsanschluss (116) anliegenden Versorgungsspannung abzüglich einer an dem Widerstand (231) abfallenden Spannung entspricht.

3. Vorrichtung gemäß einem der vorangegangenen Ansprüche, bei der die Versorgungsschaltung ein Bauelement (232, 235) aufweist, das ausgebildet ist, um eine Entladung des Kondensators (122) über den Widerstand (231) zu verhindern.

4. Vorrichtung gemäß Anspruch 3, bei der das Bauelement eine Diode (232) ist.

5. Vorrichtung gemäß einem der Ansprüche 3 oder 4, bei der das Bauelement ein Transistor (235) ist.

6. Vorrichtung gemäß einem der Ansprüche 3 bis 5, bei der der Widerstand zumindest teilweise durch einen Innenwiderstand des Bauelements (232, 235) gebildet wird.

7. Vorrichtung gemäß einem der vorangegangenen Ansprüche, bei der die Versorgungsschaltung (124) eine Zenerdiode (233) aufweist, die mit dem Kondensator (122) verbunden ist, um die Steuerspannung zu stabilisieren.

8. Vorrichtung gemäß einem der vorangegangenen Ansprüche, mit einem Längswiderstand, der zwischen dem Kondensator (122) und dem Steuereingang des Transistors (120) geschaltet ist.

9. Vorrichtung gemäß einem der vorangegangenen Ansprüche, mit einem Schalter (126), der ausgebildet ist, um abhängig von einem Schaltsignal eine elektrische Verbindung zwischen dem Steuereingang und einem Ausgang des Transistors (120) bereitzustellen.

10. Verfahren zur Bestromung einer Zündendstufe (102) mit folgenden Verfahrensschritten:
- Bereitstellen eines Zündstroms durch einen Transistor (120) in Abhängigkeit von einer Steuerspannung, die an einen Steuereingang des Transistors (120) anliegt, wobei der Transistor (120) einen Ausgang zum Bereitstellen des Zündstroms und einen mit einem Versorgungsspannungsanschluss (116) verbunden Eingang aufweist,
- Bereitstellen der Steuerspannung an den Steuereingang durch einen Kondensator (122), der mit dem Steuereingang des Transistors (120) verbunden ist,
- Aufladen des Kondensators (122) auf die Steuerspannung über einen Widerstand (231) durch eine Versorgungsschaltung (124), wobei der Widerstand (231) zwischen dem Kondensator (122) und dem Versorgungsspannungsanschluss (116) geschaltet ist.

## Claims

1. Apparatus (100) for energizing an ignition output stage (102), having the following features:
a supply voltage connection (116), which is suitable for connecting the apparatus (100) to an energy reserve (106) ;
a transistor (120) having an input that is connected to the supply voltage connection (116), an output for providing an ignition current and a control input, wherein the transistor is configured to provide the ignition current depending on a control voltage that is applied to the control input;
a capacitor (122), which is connected to the control input of the transistor and configured to provide the control voltage to the control input; and
a supply circuit (124) having a resistor (231) that is connected between the capacitor (122) and the supply voltage connection (116), wherein the supply circuit is configured to charge the capacitor (122) to the control voltage by means of the resistor (231).

2. Apparatus according to Claim 1, in which the control voltage corresponds to a supply voltage that is applied to the supply voltage connection (116) minus a voltage that is dropped across the resistor (231).

3. Apparatus according to either of the preceding claims, in which the supply circuit has a component (232, 235) that is configured to prevent discharging of the capacitor (122) by means of the resistor (231).

4. Apparatus according to Claim 3, in which the component is a diode (232).

5. Apparatus according to either of Claims 3 and 4, in which the component is a transistor (235).

6. Apparatus according to one of Claims 3 to 5, in which the resistor is at least partially formed by an internal resistance of the component (232, 235).

7. Apparatus according to one of the preceding claims, in which the supply circuit (124) has a Zener diode (233) that is connected to the capacitor (122) in order to stabilize the control voltage.

8. Apparatus according to one of the preceding claims, having a series resistor that is connected between the capacitor (122) and the control input of the transistor (120).

9. Apparatus according to one of the preceding claims, having a switch (126) that is configured to provide an electrical connection between the control input and an output of the transistor (120) depending on a switching signal.

10. Method for energizing an ignition output stage (102) having the following method steps:
- an ignition current being provided by a transistor (120) depending on a control voltage that is applied to a control input of the transistor (120), wherein the transistor (120) has an output for providing the ignition current and an input that is connected to a supply voltage connection (116),
- the control voltage being provided to the control input by a capacitor (122) that is connected to the control input of the transistor (120),
- the capacitor (122) being charged to the control voltage by means of a resistor (231) by a supply circuit (124), wherein the resistor (231) is connected between the capacitor (122) and the supply voltage connection (116).

## Revendications

1. Dispositif (100) d'alimentation en courant d'un étage final d'allumage (102) comprenant :
un raccordement de tension d'alimentation (116) qui est approprié pour relier le dispositif (100) à une réserve d'énergie (106) ;
un transistor (120) ayant une entrée qui est reliée au raccordement de tension d'alimentation (116), une sortie destinée à fournir un courant d'allumage, et une entrée de commande, dans lequel le transistor est conçu pour fournir le courant d'allumage en fonction d'une tension de commande appliquée à l'entrée de commande ;
un condensateur (122) qui est relié à l'entrée de commande du transistor et est conçu pour fournir la tension de commande à l'entrée de commande ; et
un circuit d'alimentation (124) comportant une résistance (231) qui est connectée entre le condensateur (122) et le raccordement de tension d'alimentation (116), dans lequel le circuit d'alimentation est conçu pour charger le condensateur (122) par l'intermédiaire de la résistance (231) à la tension de commande.

2. Dispositif selon la revendication 1, dans lequel la tension de commande correspond à une tension appliquée au raccordement de tension d'alimentation (116) moins une chute de tension aux bornes de la résistance (231).

3. Dispositif selon l'une quelconque des revendications précédentes, dans lequel le circuit d'alimentation comporte un composant (232, 235) qui est conçu pour empêcher une décharge du condensateur (122) par l'intermédiaire de la résistance (231).

4. Dispositif selon la revendication 3, dans lequel le composant est une diode (232).

5. Dispositif selon l'une des revendications 3 ou 4, dans lequel le composant est un transistor (235).

6. Dispositif selon l'une quelconque des revendications 3 à 5, dans lequel la résistance est au moins partiellement constituée par une résistance interne du composant (232, 235).

7. Dispositif selon l'une quelconque des revendications précédentes, dans lequel le circuit d'alimentation (124) comporte une diode Zener (233) qui est reliée au condensateur (122) pour stabiliser la tension de commande.

8. Dispositif selon l'une quelconque des revendications précédentes, comportant une résistance série qui est connectée entre le condensateur (122) et l'entrée de commande du transistor (120).

9. Dispositif selon l'une quelconque des revendications précédentes, comportant un commutateur (126) qui est conçu pour établir une liaison électrique en fonction d'un signal de commutation entre l'entrée de commande et une sortie du transistor (120).

10. Procédé d'alimentation en courant d'un étage final d'allumage (102), comportant les étapes consistant à :
- fournir un courant d'allumage par l'intermédiaire d'un transistor (120) en fonction d'une tension de commande qui est appliquée à une entrée de commande du transistor (120), dans lequel le transistor (120) comporte une sortie destinée à fournir le courant d'allumage et une entrée reliée à un raccordement de tension d'alimentation (116),
- fournir la tension de commande à l'entrée de commande par l'intermédiaire d'un condensateur (122) qui est relié à l'entrée de commande du transistor (120),
- charger le condensateur (122) à la tension de commande par l'intermédiaire d'une résistance (231) au travers d'un circuit d'alimentation (124), dans lequel la résistance (231) est connectée entre le condensateur (122) et le raccordement de tension d'alimentation (116).
